# EUROPEAN PATENT APPLICATION

(11) **EP 1 315 007 A1**
(43) Date of publication of application: **28.05.2003**
(21) Application number: 01402882.3
(22) Date of filing: 09.11.2001
(51) Int. Cl.: G02B 6/12, G02B 6/34

(54) **Polarisation dependence compensation**

(71) Applicant: Corning Incorporated, Corning, New York 14831 (US)
(72) Inventor: Vallon, Sophie, 91220 Brétigny-sur-Orge (FR)
(74) Representative: Poole, Michael John

(57) **Abstract**

An optical waveguide device is provided with reduced polarisation dependence. The device comprises a substantially symmetrical optical pathway and a first halfwave plate (5) positioned within a mid section (3) of the symmetrical optical pathway. A second halfwave plate (7) is positioned within the mid section (3) of the symmetrical optical pathway optically coupled to the first halfwave plate (5), the principal optical axes of the first and second halfwave plates (5, 7) being oriented at an angle of substantially 45° to each other. The direction of polarisation of any light transmitted by the optical pathway is rotated by substantially 90° as it is transmitted through the mid section (3) of the optical pathway.

## Description

This invention relates to an optical waveguide device having means for compensating for polarisation dependence, and a method for compensating for polarisation dependence of optical waveguide devices. The invention relates particularly, though not exclusively, to planar optical waveguide devices.

Increasingly, there is a trend towards so-called planar waveguide devices for use in optical communications. Planar waveguide devices typically include a substrate, such as silicon, quartz or lithium niobate, one or more waveguide regions (equivalent to the core of an optical fibre), and, surrounding the waveguide regions, one or more cladding regions or layers. The waveguide material may comprise titanium in-diffused lithium niobate, proton-exchanged lithium niobate, ion-exchanged glass, semiconductor, polycarbonate, polyimide, silicone resin, epoxy resin or, preferably, silica or doped silica. In addition, one or more buffer layers may lie between the substrate and the waveguide regions. Such devices display small optical loss and a high stability against disturbances such as heat or vibrations. Many optical devices can be realised using planar waveguide technology, including phasar multi/demultiplexers, variable optical attenuators (VOAs), dynamic gain flattening filters and dispersion compensation modules.

When putting planar waveguide devices into practical use, a serious problem arises due to polarisation dependence. During manufacture, the difference in thermal expansion coefficient between the materials of the waveguide regions, the surrounding cladding regions and the substrate gives rise to different stresses on the waveguides in a direction parallel to the surface of the substrate compared to those in a direction perpendicular to the substrate surface. Consequently, the refractive index of the optical waveguide in the direction parallel to the surface of the substrate becomes different from that in a direction perpendicular to the substrate surface. This is known as waveguide birefringence. All waveguides currently manufactured have waveguide birefringence, and although the degrees of birefringence vary, most planar optical devices suffer from high polarisation dependent loss. Non-planar waveguide devices can also suffer from birefringence and polarisation dependent loss.

If, for example, an asymmetrical Mach-Zehnder interferometer is formed on a planar waveguide device, this waveguide birefringence causes the optical path length of an arm constituting the interferometer to change depending on the direction of polarisation of the light passing through it. Consequently, the device characteristics change in accordance with the state of polarisation of the light.

To compensate for planar waveguide birefringence, US 5930439 teaches the use of a cladding region having a thermal coefficient of expansion close or equal to that of the substrate. However, for some substrate/cladding material combinations, such as silicon substrate with polymer waveguide and cladding, it is not possible to adapt the thermal coefficient of expansion of the cladding accordingly. Furthermore, modifying the cladding material may result in deterioration of some of the characteristics of the planar waveguide, such as environmental stability in the case of highly doped silica glasses.

US 6072920 discloses the use of a halfwave plate at the centre of an optical circuit with the principle optical axis of the halfwave plate forming an angle of 45° with the substrate. In this configuration, the halfwave plate converts horizontally polarised light within the optical circuit (light having an electric field component along an axis parallel to a substrate) into vertically polarised light (light having an electric field component along an axis perpendicular to a substrate) and vice versa. Performing this transformation of plane of polarisation in the middle of the optical path reduces the polarisation dependence of the circuit.

However, any light propagating through the optical path having a plane of polarisation parallel or perpendicular to the principal optical axis of the halfwave plate will not be transformed by the halfwave plate. In complex devices such as dynamic gain flattening filters, each component (couplers, thermo-optic phase shifters, geometrical phase shifters) contributes to polarisation dependent loss and transformation of the state of polarisation, and the halfwave plate may not transform the state of polarisation of light to an adequate extent to reduce the polarisation dependent loss to an acceptable level.

It is an object to provide a device and method which can reduce polarisation dependence in complex optical devices.

According to a first aspect of the invention, there is provided an optical waveguide device comprising:
a substantially symmetrical optical pathway; and
a first halfwave plate positioned within a mid section of the symmetrical optical pathway, characterised in that a second halfwave plate is positioned within the mid section of the symmetrical optical pathway optically coupled to the first halfwave plate, the principal optical axes of the first and second halfwave plates being oriented at an angle of between 30° and 60° to each other, whereby the direction of polarisation of any light transmitted by the optical pathway is rotated as it is transmitted through the mid section of the optical pathway.

By orienting the principle optical axis of the second halfwave plate at between 30° and 60° to that of the first halfwave plate, the direction of polarisation of any light transmitted through the mid section will be rotated by between 60° and 120°, regardless of its initial plane of polarisation. Rotation of the direction of polarisation through such angles should significantly reduce polarisation dependent effects in a symmetrical optical pathway.

Preferably, the principal optical axes of the first and second halfwave plates are oriented at an angle of substantially 45° to each other. In this way, the direction of polarisation of any light transmitted through the mid section will be rotated by 90°, which should substantially cancel polarisation dependent effects in a symmetrical optical pathway.

Preferably, the substantially symmetrical optical pathway comprises optical waveguides formed on a planar substrate.

The optical waveguides may comprise silica and the substrate may comprise silicon. In this case the halfwave plates preferably comprise a birefringent polymer film.

The optical waveguide device is particularly suitable for incorporation within complex optical devices, such as dynamic gain flattening filters.

According to a second aspect of the invention, there is provided a method for compensating for polarisation dependence of an optical waveguide device comprising a substantially symmetrical optical pathway, the method comprising inserting a first halfwave plate within a mid section of the optical pathway, characterised by inserting a second halfwave plate within the mid section of the optical pathway optically coupled to the first halfwave plate, the principal optical axes of the first and second halfwave plates being oriented at an angle of between 30° and 60° to each other, whereby the direction of polarisation of any light transmitted by the optical pathway is rotated as it is transmitted through the mid section of the optical pathway. Preferably, the principal optical axes of the first and second halfwave plates are oriented at an angle of substantially 45° to each other.

In order that the invention may be more fully understood embodiments thereof will now be described by way of example only, reference being made to the accompanying drawings in which:
Fig. 1 is a vector diagram showing the polarisation transformation performed by a halfwave plate;
Fig. 2 is a vector diagram showing the polarisation transformation performed by two halfwave plates whose principle optical axes are tilted by 45° with respect to each other;
Fig. 3 is a schematic diagram showing a planar dynamic gain flattening filter device incorporating a single halfwave plate;
Fig. 4 is a graph showing optical loss data using the device of fig. 3;
Fig. 5 is a schematic diagram showing a planar dynamic gain flattening filter device incorporating two halfwave plates in accordance with the invention;
Fig. 6 is a vector diagram showing the eigenaxes of the device of fig. 5; and
Fig. 7 is a graph showing optical loss data using the device of fig. 5.

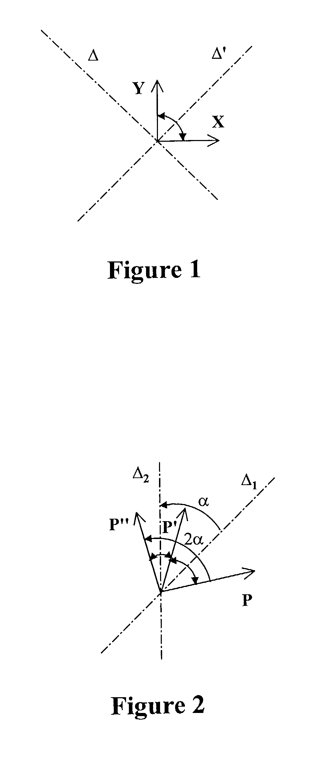

Fig. 1 demonstrates the effect of placing a halfwave plate within an optical pathway of an optical device on the polarisation of light transmitted by the optical pathway. The halfwave plate applies a π phase shift between its eigenaxes Δ and Δ', which results in axis Δ or Δ' acting as an axis of symmetry about which the plane of polarisation of incident light is rotated. Hence, if the eigenaxes Δ and Δ' are tilted by 45° with respect to the horizontal and vertical axes of the optical device (ie the x and y axes), then horizontally polarised light is converted to vertically polarised light and vice versa as it passes through the halfwave plate. In contrast, light having planes of polarisation along the eigenaxes Δ and Δ' are not modified by the halfwave plate.

In order to rotate any plane of linearly polarised light by 90°, two halfwave plates are required. Fig. 2 demonstrates the effect of placing two halfwave plates within the optical pathway on the polarisation of incident light. The eigenaxes of the first and second halfwave plates Δ₁ and Δ₂ respectively are tilted by an angle of α with respect to each other. The plane of polarisation P of light incident on the first halfwave plate experiences symmetrical rotation about axis Δ₁ to P'. Further transmission through the second halfwave plate results in symmetrical rotation of the plane of polarisation P' about axis Δ₂ to P". It can be seen that transmission of light through two halfwave plates whose eigenaxes are tilted by an angle of α with respect to each other will rotate its plane of polarisation through an angle of 2α. Therefore, if the eigenaxes of the two halfwave plates are tilted by 45° with respect to each other, then any plane of polarisation of incident light will be rotated by 90°.

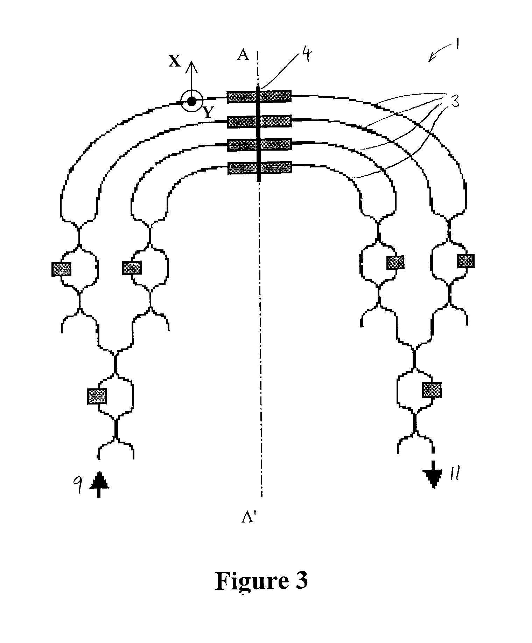

Fig. 3 shows a substantially symmetrical planar dynamic gain flattening filter device 1 (DGFF) which is described in co-pending European patent application no. 00401993.1. The DGFF comprises a silica on silicon optical circuit having a number of optical pathways formed by two series of interferometers optically coupled to, and arranged either side of, four waveguides 3 forming a mid section which traverses the axis of symmetry A-A' of the waveguide structure. A halfwave plate 4 comprising a polyimide film with a film thickness of approximately 15µm is inserted into a trench across the optical waveguides 3 within the mid section close to the axis of symmetry A-A'. The optical axis of the polyimide halfwave plate is tilted by 45° with respect to the x and y axes of the device.

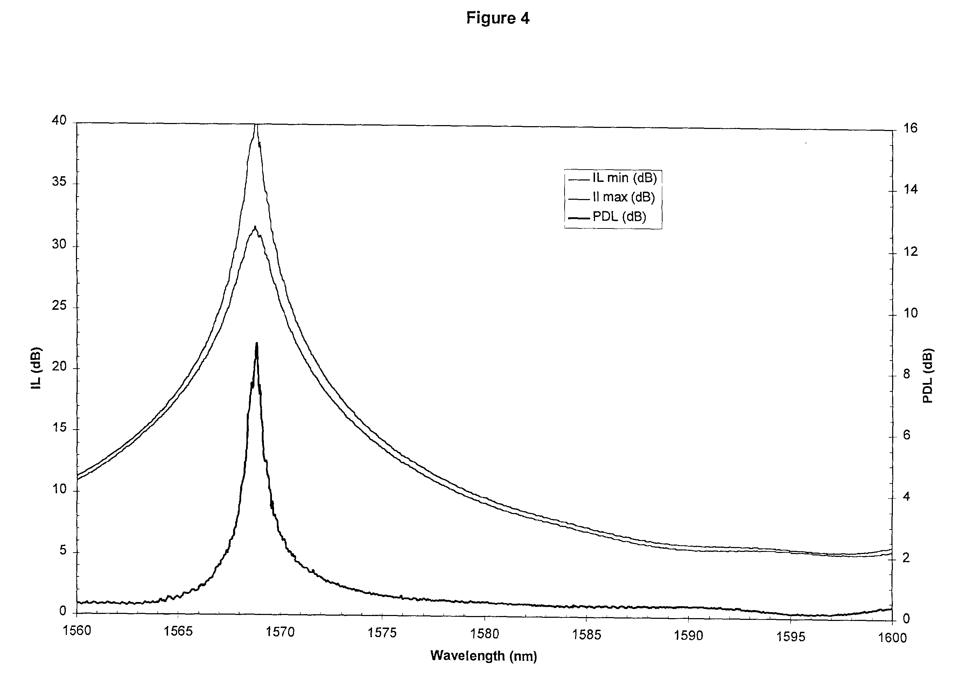

In operation, optical radiation is transmitted from the input 9 of the dynamic gain flattening filter through the first series of interferometers to the optical waveguides 3. As the light then passes through the halfwave plate 4, its plane of polarisation experiences symmetrical rotation about the eigenaxis of the halfwave plate. The optical radiation is then transmitted through the second series of interferometers to the output 11. With a substantially symmetrical structure, polarisation dependent effects experienced by light transmitted through the optical pathways will be similar on both sides of the axis of symmetry. In the absence of the halfwave plate 4, such polarisation dependent effects would be cumulative as light is transmitted through both sides of the device, leading to high polarisation dependent loss. However, such loss is reduced by the presence of the halfwave plate 4, because any light incident on the halfwave plate having horizontal or vertical polarisation will be rotated through 90°, while any other light will experience lesser or zero rotation depending on its polarisation state. Fig. 4 shows data measured using the device of fig. 3, including minimum (IL min) and maximum (IL max) insertion loss for all polarisation states and polarisation dependent loss (PDL) versus wavelength. As can be seen, the maximum value of the PDL is 8.9dB.

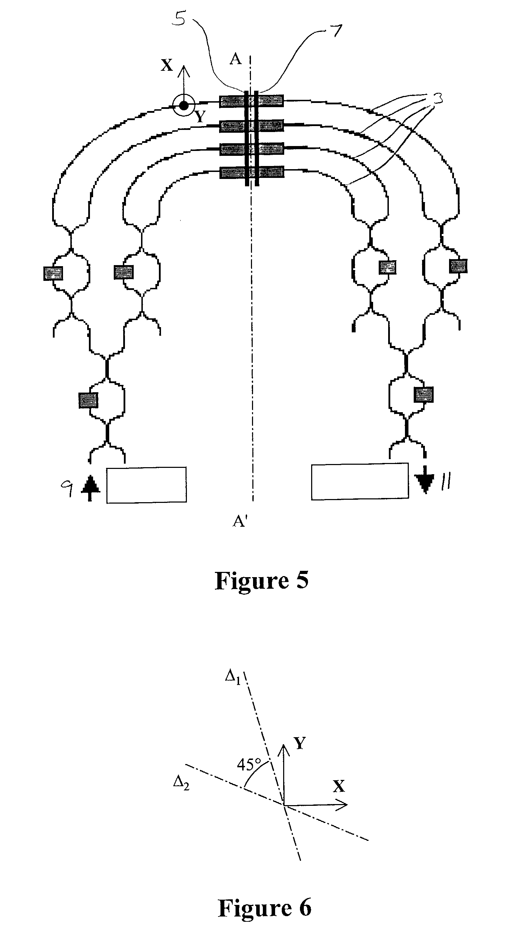

Fig. 5 shows a similar device to that of fig. 3, but instead of a single halfwave plate 4 on the axis of symmetry, two polyimide halfwave plates 5, 7 are positioned across the optical waveguides 3 within the mid section close to the axis of symmetry A-A'. As shown in fig. 6, the optical eigenaxes Δ₁ and Δ₂ of the halfwave plates are tilted by 45° with respect to each other, though their orientation with respect to the eigenaxes x and y of the waveguide device is immaterial.

In operation, optical radiation is transmitted from the input 9 of the dynamic gain flattening filter through the first series of interferometers to the optical waveguides 3 just as described above with reference to fig. 3. The plane of polarisation of light entering the optical waveguides 3 of the mid section may lie in any orientation as a result of transmission through the first series of interferometers. As the light then passes through the first halfwave plate 5, its plane of polarisation experiences symmetrical rotation about the eigenaxis Δ₁ just as described above. However, on further transmission through the second halfwave plate 7, the plane of polarisation experiences further symmetrical rotation about the eigenaxis Δ₂. Since the eigenaxes of the two halfwave plates are tilted by 45° with respect to each other, the plane of polarisation of the light transmitted through the mid section is rotated by 90°, irrespective of its plane of polarisation prior to transmission through the halfwave plates. Rotation of the plane of polarisation of the transmitted light through 90° mid-way along the substantially symmetrical optical pathways ensures that all incident light, irrespective of its polarisation state, will contribute to compensation for the polarisation dependent effects experienced by the transmitted light after passing through the first half of the device as the rotated polarisation state light is transmitted through the second half of the device.

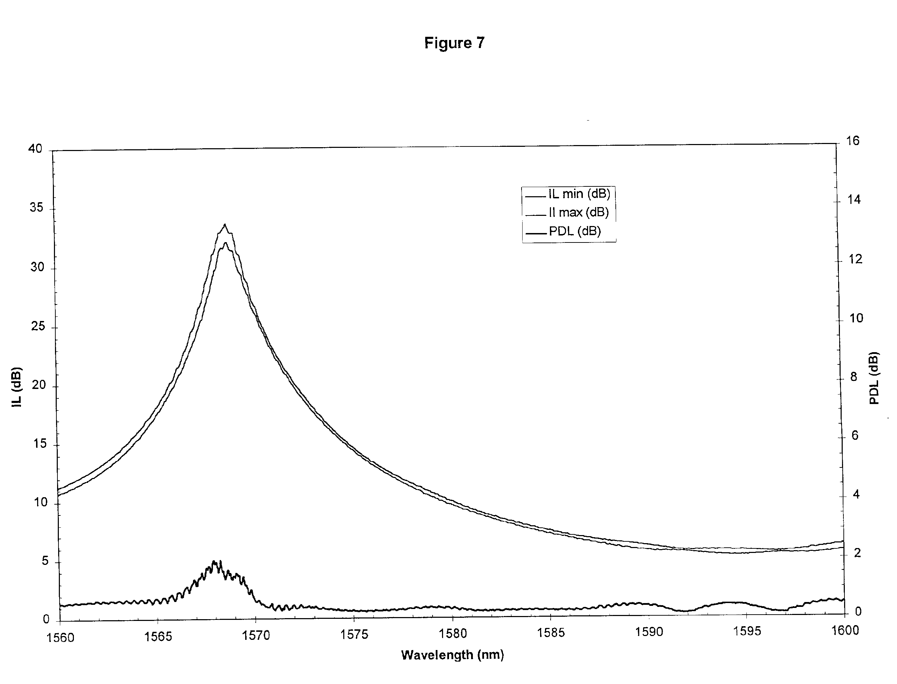

The dramatic effects of compensation achieved using the device of fig. 5 in accordance with the present invention can be seen from the data of fig. 7. Apart from the use of two halfwave plates, all other experimental conditions were the same as those used to obtain the data shown in fig. 4. Using the device of fig. 5, the maximum value of the PDL is just 2.0dB.

Ideally the eigenaxes of the two halfwave plates are tilted by 45° with respect to each other, since this results in rotation of the plane of polarisation of the light transmitted by 90°. However, tilting of the halfwave plates at angles of between 30° and 60° should significantly reduce polarisation dependent effects.

Although polyimide films were used to form the halfwave plates, it will be clear that other materials may be used, including other birefringent polymer films. Such films should have an ordinary axis and an extraordinary axis in the film plane, and a thickness such that the phase difference between the ordinary and extraordinary axes is substantially equal to π, or an odd multiple of π. Birefringence may be created in a polymer film by uniaxially drawing the film, so creating anisotropy in the film. The amount of birefringence will depend on the polymer and the film stretching. Preferably, the film birefringence is such that the thickness required to obtain a phase difference of π is of the order of 5-30µm, which is thick enough to handle the film easily, and thin enough to avoid free-space propagation loss in the film. Preferably, the birefringent film should be environmentally stable.

The invention has been described herein by specific reference to a planar dynamic gain flattening filter device. However, it will be clear that the invention can be applied to any substantially symmetrical optical circuits which have inherent birefringence to reduce polarisation dependent effects. In this sense, a substantially symmetrical optical pathway is an optical pathway that can be divided into two halves having equivalent polarisation characteristics. Such circuits may include planar and non-planar devices.

Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.

## Claims

1. Optical waveguide device comprising:
a substantially symmetrical optical pathway; and
a first halfwave plate positioned within a mid section of the symmetrical optical pathway,
**characterised in that** a second halfwave plate is positioned within the mid section of the symmetrical optical pathway optically coupled to the first halfwave plate, the principal optical axes of the first and second halfwave plates being oriented at an angle of between 30° and 60° to each other, whereby the direction of polarisation of any light transmitted by the optical pathway is rotated as it is transmitted through the mid section of the optical pathway.

2. Optical waveguide device according to claim 1, wherein the principal optical axes of the first and second halfwave plates are oriented at an angle of substantially 45° to each other, whereby the direction of polarisation of any light transmitted by the optical pathway is rotated by substantially 90° as it is transmitted through the mid section of the optical pathway.

3. Optical waveguide device according to claim 1 or 2, wherein the substantially symmetrical optical pathway comprises optical waveguides formed on a substrate.

4. Optical waveguide device according to claim 3, wherein the substrate is planar.

5. Optical waveguide device according to claim 4, wherein the optical waveguides comprise silica and the substrate comprises silicon.

6. Optical waveguide device according to claim 5, wherein the first and second halfwave plates comprise a birefringent polymer film.

7. Dynamic gain flattening filter comprising an optical waveguide device according to any preceding claim.

8. Method for compensating for polarisation dependence of an optical waveguide device comprising a substantially symmetrical optical pathway, the method comprising inserting a first halfwave plate within a mid section of the optical pathway, **characterised by** inserting a second halfwave plate within the mid section of the optical pathway optically coupled to the first halfwave plate, the principal optical axes of the first and second halfwave plates being oriented at an angle of between 30° and 60° to each other, whereby the direction of polarisation of any light transmitted by the optical pathway is rotated as it is transmitted through the mid section of the optical pathway.

9. Method for compensating for polarisation dependence of an optical waveguide device according to claim 8, wherein the principal optical axes of the first and second halfwave plates are oriented at an angle of substantially 45° to each other, whereby the direction of polarisation of any light transmitted by the optical pathway is rotated by substantially 90° as it is transmitted through the mid section of the optical pathway.
